(19) **Europäisches Patentamt / European Patent Office / Office européen des brevets**

(11) **EP 3 401 200 B1**

(12) **FASCICULE DE BREVET EUROPÉEN**

(45) Date de publication et mention de la délivrance du brevet:
**16.12.2020 Bulletin 2020/51**

(51) Int Cl.:
**B62K 25/02** (2006.01)  **B60B 27/02** (2006.01)
**B60B 35/08** (2006.01)  **F16C 3/02** (2006.01)
**F16J 15/3256** (2016.01)

(21) Numéro de dépôt: **18171574.9**

(22) Date de dépôt: **09.05.2018**

(54) **DISPOSITIF DE FIXATION D'UNE ROUE DE CYCLE**

VORRICHTUNG ZUR BEFESTIGUNG EINES LAUFRAD

DEVICE FOR ATTACHMENT OF A BICYCLE WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.05.2017 FR 1770487**

(43) Date de publication de la demande:
**14.11.2018 Bulletin 2018/46**

(73) Titulaire: **MAVIC S.A.S.**
**74370 Metz-Tessy (FR)**

(72) Inventeur: **MERCAT, Jean-Pierre**
**74650 Chavanod (FR)**

(56) Documents cités:
**EP-A2- 2 987 713      WO-A2-2008/145496**
**FR-A1- 3 037 919**

**Description**

La présente invention concerne un dispositif permettant la fixation d'une roue de cycle sur le cadre d'un vélo. Depuis de nombreuses années, il était courant d'utiliser un dispositif dit « à attache rapide » pour monter et démonter très rapidement une roue d'un vélo. Un tel dispositif est par exemple décrit dans le document EP 810 944. Ces dispositifs comportent notamment une tige fine (diamètre extérieur inférieur à 6 mm) qui traverse l'intérieur de l'axe du moyeu et dont les deux extrémités sont solidaires d'éléments de butée. Ce sont ces éléments de butée qui viennent au contact avec les pattes du cadre ou de la fourche, la fixation de la roue se faisant en diminuant la distance séparant les deux éléments de butée l'un de l'autre. En général, l'un des éléments de butée est relié par une liaison vis/écrou sur la tige tandis que l'autre dispose d'un mécanisme de came et d'un levier qui permet de modifier rapidement la position de l'élément de butée par rapport à la tige. Un tel système ne permet pas toujours de doser l'effort de serrage qu'exerce l'utilisateur, et un serrage dépassant les seuils recommandés par les fabricants de roues ou de vélo, peuvent notamment générer une compression axiale excessive de l'axe du moyeu pouvant engendrer une détérioration du montage des roulements à billes du moyeu en induisant soit une trop grande précontrainte axiale sur ces derniers ou au contraire un jeu excessif suivant le type de montage de roulement utilisé. D'autre part, un tel système de serrage rapide n'apporte aucune contribution mécanique à la rigidité du cadre ou de la fourche.

Pour résoudre le problème de dépassement de seuils de serrage recommandés, il a été envisagé de compléter le dispositif de fixation avec un limiteur de couple comme dans le document EP 2 070 725. Ce dispositif comportait également une interface de différentiel de frottement entre les modes de serrage et de desserrage de manière à limiter les risques de desserrage. Cette interface n'apporte cependant que peu d'intérêt dans la mesure où, dans le sens du desserrage, elle n'est effective qu'après une rotation angulaire de quelques degrés dans le sens du desserrage ce qui est déjà suffisant pour faire chuter l'effort de serrage de manière excessive.

On a vu apparaître des systèmes dits à broche qui diffèrent des dispositifs décrits ci-dessus notamment par le diamètre de la tige traversant le moyeu de part en part. Ces dispositifs ont d'abord été principalement utilisés pour les vélos dédiés aux pratiques sportives où les sollicitations mécaniques des vélos sont très importantes, comme par exemple le VTT de descente. Un tel dispositif est décrit dans le document US 9308961.

Ces dispositifs comprennent une broche (diamètre extérieur supérieur à 10 mm), dont la première extrémité, filetée, est prévue pour être vissée dans une des pattes du cadre (ou de la fourche) tandis que l'autre est équipée de moyens d'entraînement en rotation de la tige, par exemple une empreinte de clé Allen. Ces dispositifs sont certes plus solides, mais ils ont l'inconvénient d'être lents et ne permettent pas de doser la force de serrage à moins de disposer d'une clé dynamométrique. Or, l'utilisateur n'a pas toujours en sa possession un tel outil.

De telles broches sont par exemple décrites dans les documents suivants. La demande internationale WO 2008/145496 décrit une broche équipée d'un dispositif limiteur de couple. La demande française FR 3037919 décrit, quant à elle, une broche comportant une bague fendue qui exerce une force de friction à l'intérieur du moyeu de façon à ce que la broche puisse se maintenir à l'intérieur du moyeu, même lorsque celle-ci n'est pas vissée dans la fourche ou le cadre, correspondant aux caractéristiques du préambule de la revendication 1. Enfin, la demande européenne EP 2987713 décrit une broche dont les moyens d'entraînement peuvent être désolidarisées de la tige.

Pour des raisons de sécurité et éviter les risques de desserrage des dispositifs de fixation de roue, il est recommandé que le couple de desserrage soit supérieur à 70 % du couple de serrage. Lorsque le dispositif fonctionne avec un excentrique comme par exemple EP 810 944, il est très facile de respecter cette condition. En revanche, cela est plus difficile à faire lorsqu'il s'agit d'une broche vissée dans le cadre ou la fourche. En effet, compte tenu des angles d'hélice du filetage, les frottements à l'œuvre entre les surfaces du filet et du taraudage sont moins importants dans le sens du desserrage que dans le sens du serrage. D'ailleurs, plus le pas du filet est important, plus cette différence est importante. Or, pour rendre plus rapide l'opération de vissage de la broche, le concepteur peut être amené à choisir un pas de filetage important et même un double, voire un multi-filetage. C'est la raison pour laquelle les fabricants de broches vissées actuelles prévoient des dispositifs anti-desserrage supplémentaires qui non seulement alourdissent la broche mais également en rendent la manipulation plus compliquée.

L'objectif de la présente invention est de proposer un dispositif de fixation d'une roue qui permet de remédier aux inconvénients de l'art antérieur. Notamment, l'objectif de l'invention est de proposer une broche de serrage dont l'utilisation n'occasionne aucun dommage aux paliers à roulements du moyeu de la roue.

L'objectif est également de fournir une broche de serrage qui soit simple à utiliser pour l'utilisateur tout en lui assurant une excellente sécurité, par exemple en empêchant tout risque de desserrage.

Enfin, l'objectif de l'invention est de concevoir une broche qui soit légère et peu volumineuse pour, notamment, améliorer les performances aérodynamique d'un vélo équipé de telles broches.

L'objectif de la présente invention est atteint par la fourniture d'une broche de serrage pour la fixation d'une roue de cycle sur le cadre d'un cycle comportant une tige s'étendant selon un axe longitudinal et ayant une partie centrale encadrée par deux extrémités, la première desdites deux extrémités comportant une portion filetée apte à coopérer avec un taraudage ménagé dans une première portion du cadre du cycle, la deuxième extrémité étant, quant à elle, pourvue de moyens de butée axiale prévus pour venir au contact d'une deuxième portion du cadre du cycle ainsi que de moyens d'entraînement prévus pour permettre à un utilisateur d'exercer alternativement un couple de serrage ou un couple de desserrage, et dans laquelle un limiteur de couple opérationnel dans le sens de serrage est placé entre lesdits moyens d'entraînement et ladite tige et en ce que la broche comprend en outre un dispositif de freinage apte à augmenter le couple nécessaire pour initier la rotation des moyens d'entraînement dans le sens du desserrage, ledit dispositif de freinage comprenant deux surfaces de friction qui sont en contact l'une avec l'autre lorsque les moyens de butée axiale sont en contact avec la deuxième portion de cadre ; et ledit limiteur de couple est opérationnel lorsque le couple de serrage exercé par l'utilisateur s'approche du seuil de déclenchement ce qui se traduit immédiatement par l'écartement des deux surfaces de friction l'une par rapport à l'autre, engendrant ainsi la mise hors service du dispositif de freinage.

Dans un mode de réalisation de l'invention le dispositif limiteur de couple comprend deux bagues à cames juxtaposées et mobiles l'une par rapport à l'autre en translation selon l'axe longitudinal et en rotation selon le même axe et chacune desdites bagues comprend des surfaces de cames permettant de faire varier la position axiale relative des deux bagues entre une position « proche » et une position « écartée ».

De préférence, le dispositif de freinage est placé entre lesdits moyens d'entraînement et ladite tige.

Dans un mode de réalisation préféré, le dispositif de freinage comprend une douille cylindrique dont une première extrémité axiale constitue lesdits moyens de butée axiale et dont une deuxième extrémité peut venir en contact avec une surface solidaire des moyens d'entraînement.

La longueur axiale de la douille est telle que lorsque les deux bagues du limiteur de couple sont dans la position « proche », la deuxième extrémité de la douille est en contact avec la surface solidaire des moyens d'entraînement tandis que lorsque les deux bagues sont en position « écartée », la deuxième extrémité de la douille n'est pas en contact avec ladite surface.

De préférence, le limiteur de couple présente une valeur de déclenchement comprise entre 3 et 20 N.m, de préférence, comprise entre 6 et 12 N.m.

De préférence, lorsque l'utilisateur initie la phase de desserrage, le dispositif de freinage génère un couple de frottement qui est supérieur à 5%, de préférence 10% de la valeur du couple de déclenchement du limiteur de couple.

L'invention sera mieux comprise à la lecture de description qui suit et à laquelle est joint le dessin, dessin dans lequel :

La figure 1 est une vue en perspective de la broche selon l'invention.

La figure 2 est une vue en coupe de la broche de la figure 1.

La figure 3 est une vue en perspective éclatée de la broche de la figure 1.

La figure 4 est une vue de détail de la broche à l'état libre.

La figure 5 est une vue de détail de la broche en fin d'opération de serrage.

La figure 6 est une vue de détail de la broche au début de l'opération de desserrage.

Les figures 7 à 10 sont des vues partielles schématiques montrant les positions relatives des deux bagues à cames.

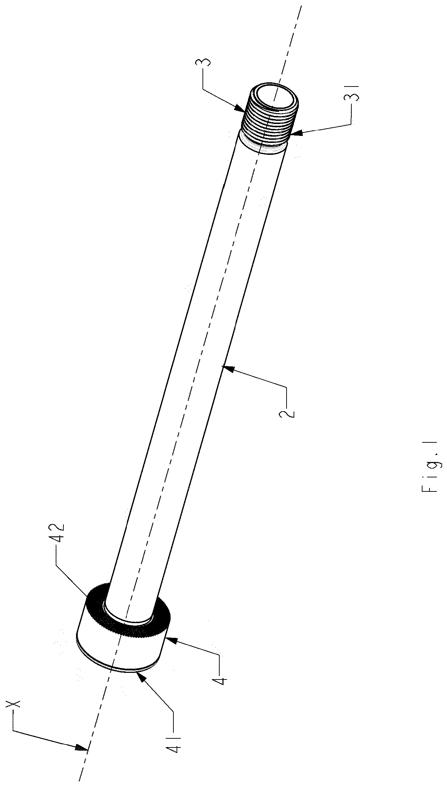

La figure 1 montre en vue en perspective, la broche 1 permettant de fixer la roue sur le cadre de vélo, notamment aux pattes arrière du cadre s'il s'agit d'une roue arrière ou aux pattes de fourche, s'il s'agit d'une roue avant. Elle se constitue d'une tige 2, d'axe longitudinal X, dont une première extrémité 3 comporte une portion filetée 31 prévue pour coopérer avec un taraudage ménagé dans une première patte de fourche ou du cadre.

La deuxième extrémité 4 comprend notamment des moyens d'entraînement 41 susceptibles de transmettre un couple à la tige 2 et des moyens de butée axiale prévus pour venir prendre appui sur une surface extérieure d'une deuxième patte de fourche ou de cadre.

Les moyens de butée axiale 42 sont constitués par une surface annulaire 83 orientée selon un plan perpendiculaire à l'axe longitudinal. Il est à noter que le caractère plan des moyens de butée axiale est une conséquence directe du caractère plan de la surface extérieure de la patte de cadre ou de fourche sur lequel ces moyens de butée s'appuient. Il est d'ailleurs également envisageable de prévoir un encastrement conique entre les moyens de butée axiale et la surface de la patte de fourche ou du cadre. La surface annulaire des moyens de butée 42 est moletée afin d'augmenter le coefficient de frottement.

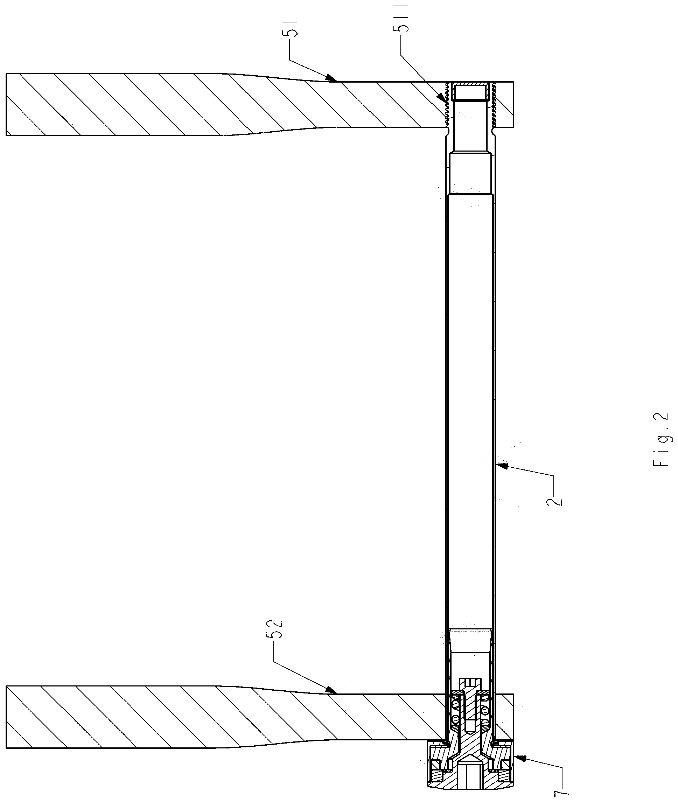

La figure 2 montre en vue en coupe longitudinale la broche 1 lorsqu'elle est en place dans une fourche 5. Par soucis de clarté, la roue et son moyeu n'ont pas été représentés. Lorsque la roue est en place, l'arbre central du moyeu est situé autour de la broche 1 et le moyeu est maintenu latéralement entre les deux pattes de fourche 51, 52. La deuxième extrémité de la broche comporte des moyens limiteurs de couple 7 qui sont opérationnels lorsque les moyens d'entraînement tournent dans le sens de serrage.

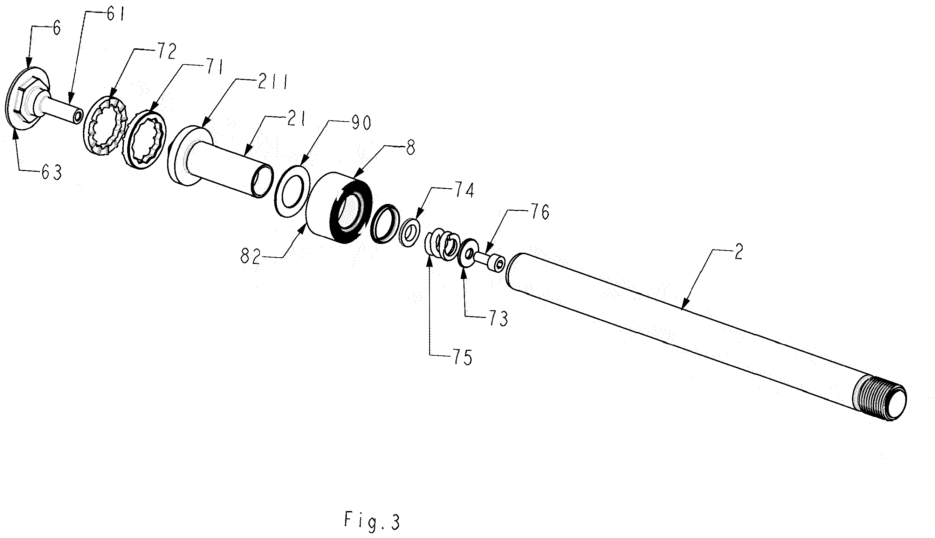

La figure 3 montre en vue en perspective éclatée, l'ensemble des pièces constituant la deuxième extrémité de la broche. Tout d'abord la tige 2 de la broche se prolonge par un canon 21 qui lui est parfaitement solidaire. La liaison entre la tige 2 et le canon 21 pouvant se faire par collage ou tout autre moyen de solidarisation. L'extrémité du canon 21 comprend une collerette 211 qui comporte sur sa surface frontale une empreinte externe à six pans. Cette empreinte externe est prévue pour recevoir dans un engagement de forme, une première bague à cames 71. Ainsi, la bague à came 71, le canon 21 et la tige sont solidaires en rotation.

Dans le mode de réalisation décrit ici, les moyens d'entraînement 41 comprennent un capuchon 6 dont la face externe comporte une empreinte interne prévue pour recevoir une clé Allen et dont la face interne comporte une empreinte externe à six pans. Cette empreinte externe reçoit une deuxième bague à came 72 solidaire en rotation avec le capuchon 6. Cette construction n'est pas la seule possible dans le cadre de l'invention et on peut envisager que ces moyens comprennent également un levier d'actionnement permettant de se passer d'une clé pour serrer la broche.

Chacune des deux bagues à cames 71 et 72 comportent une ouverture centrale de forme complémentaire de celle des empreintes externes autour desquelles elles viennent s'imbriquer. Ces deux bagues sont par ailleurs juxtaposées et comportent respectivement sur chacune de leur face frontale qui se font face, une série de cames 77. Cette double pluralité de cames 77 sont orientées radialement et sont régulièrement réparties circonférentiellement. Les cames 77 constituent une succession de nervures radiales 73 qui font saillie depuis les faces frontales des bagues.

L'extrémité interne du capuchon 6 comprend un fût 61 taraudé dans lequel est insérée une vis 76 qui par l'intermédiaire d'une première rondelle d'appui 73 constitue une butée du ressort 75 du dispositif limiteur de couple. Le ressort 75 est d'autre part maintenu par une deuxième rondelle d'appui 74 placée à l'intérieur du canon 21. Le ressort 75 contraint le capuchon 6 en direction de l'ensemble tige/canon et par voie de conséquence, les deux bagues à cames 71 et 72 l'une contre l'autre. Ces deux bagues à cames 71 et 72 peuvent être de préférence identiques et retournées l'une contre l'autre, elles peuvent être obtenues aisément par frittage de poudre en acier afin d'obtenir une pièce précise, économique, ayant une grande dureté et une très bonne résistance à l'usure en étant de préférence autolubrifiée par imprégnation de graisse. Dans un mode de réalisation simplifié, les bagues à cames sont omises et remplacées par la mise en place de cames 77 directement sur le capuchon 6, d'une part, et sur le canon 21, d'autre part.

Un dispositif limiteur de couple 65 est placé entre les moyens d'entraînement 41 et la tige 2. Le dispositif limiteur de couple permet la rupture de l'entraînement entre le capuchon et l'ensemble tige/canon. Ce dispositif comprend les deux bagues à cames 71 et 72 et un ressort 75. Il fonctionne par la coopération entre les cames des deux bagues et par la contrainte exercée par le ressort 75. Tant que le couple de serrage exercé par l'utilisateur est relativement faible, les deux bagues restent au plus près l'une de l'autre et les surfaces de cames de la deuxième bague à came 72 et celles de la première bague 71 sont en contact. Alors, la rotation du capuchon 6, et de la deuxième bague 72 qui lui est solidaire, entraîne la rotation de la première bague 71 dans le sens de serrage. Comme la première bague 71 est solidaire du canon 21 et de la tige 2, on procède alors au vissage de la portion filetée dans la patte de fourche. On désigne cette position relative des bagues l'une par rapport à l'autre, la configuration « proche ».

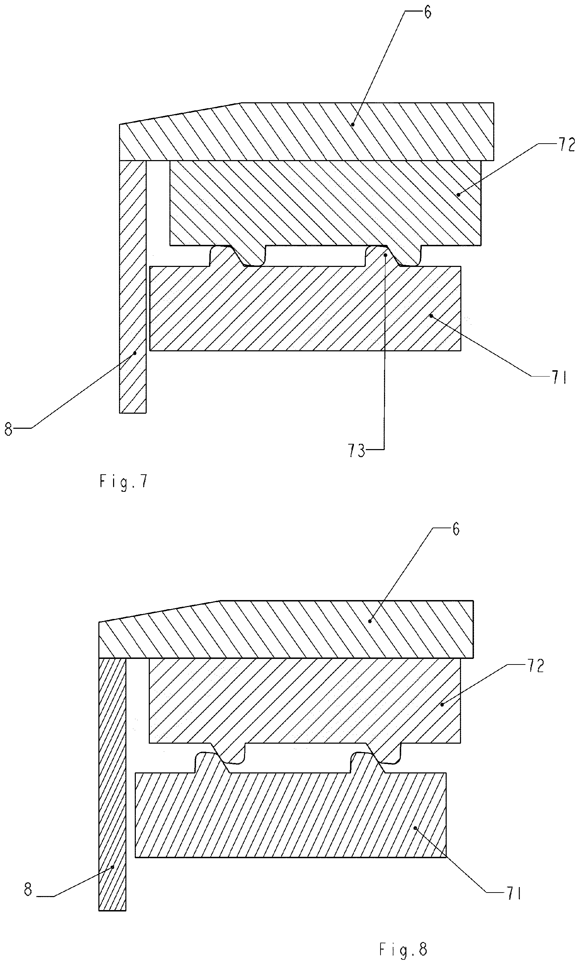

La figure 7 montre schématiquement comment coopèrent les deux bagues 71 et 72 lorsque le capuchon 6 est entraîné dans le sens de vissage. La vue 7, ainsi que les vues 8 à 10 sont des vues schématiques partielles qui ont pour but d'expliciter le fonctionnement du limiteur de couple et du dispositif de freinage. La succession de deux nervures 73 adjacentes de chacune des deux bagues à cames 71 et 72 y sont représentées de manière développée.

A tout moment, le ressort 75 contraint le capuchon 6 et la première bague à came 71 au contact de la deuxième bague à came 72. Au début de la phase de serrage, tel que cela est montré à la figure 7, les surfaces de came 77 des nervures 73 de chacune des bagues 71 et 72 restent au contact l'une avec l'autre.

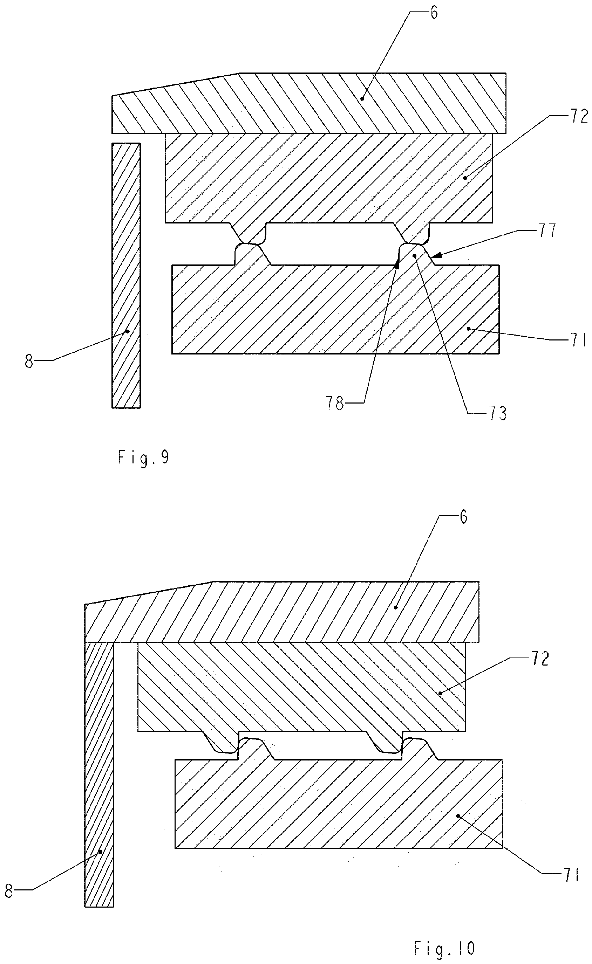

Les surfaces de came en contact ayant une forme globalement hélicoïdale, lorsque l'utilisateur transmet un couple de serrage au travers de ces cames, un effort axial induit est alors généré et dès lors que cet effort axial induit dépasse le seuil de précontrainte du ressort 75, les deux cames vont alors glisser, ceci aura pour effet d'écarter les bagues l'une de l'autre. La figure 8 montre le glissement relatif des surfaces de came l'une contre l'autre. Lorsque la distance entre les deux bagues est égale à la hauteur des nervures qui portent les surfaces de cames, il y a désolidarisation de la rotation entre le capuchon et la tige. En d'autres termes, l'entraînement du capuchon par la clé ne se traduit plus par une rotation de la tige. Ainsi l'effort de serrage est limité. Cette configuration est représentée à la figure 9.

En revanche, lorsque l'utilisateur cherche à transmettre un couple de desserrage, ce sont les surfaces d'appui opposées 78 aux surfaces de came qui viennent en contact l'une avec l'autre comme on le voit à la figure 10. Ces surfaces d'appui 78 sont très abruptes ne permettant pas une réversibilité en un mouvement axial de sorte que la transmission d'un couple de desserrage n'induise aucun effort axial.

Le dispositif limiteur de couple décrit ci-dessus n'est qu'un exemple parmi d'autres de construction permettant de limiter le couple.

La broche de l'invention comporte en outre un dispositif de freinage permettant d'assurer un différentiel de frottement entre le serrage et le desserrage. Celui-ci comprend principalement une douille 8 qui est libre en rotation par rapport au capuchon 6, d'une part, et à l'ensemble canon/tige, d'autre part. Le fonctionnement va en être expliqué ci-dessous.

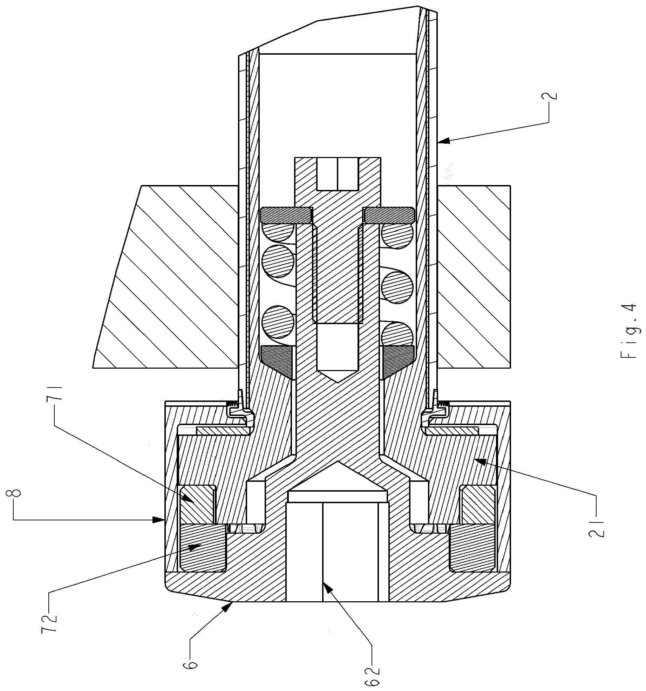

La figure 4 montre une vue de détail en coupe longitudinale de la deuxième extrémité de la broche en position libre, c'est-à-dire lorsque la broche n'est pas serrée et que par conséquent, les moyens de butée axiale ne sont pas au contact de la patte de fourche. Dans cette configuration le couple de serrage, qui est exercé par l'utilisateur par l'intermédiaire d'une clé Allen insérée dans l'empreinte 62, est relativement faible et il est directement transmis à la tige via la deuxième bague 72, puis la première bague 71, puis le canon 21.

Le couple exercé assure alors la progression axiale de la broche du fait de la liaison vis/écrou existant entre l'extrémité filetée de la tige 2 et le taraudage 511 de la première patte de fourche 51.

Cette configuration se poursuit jusqu'à ce que les moyens de butée axiale ménagés sur une première extrémité axiale 83 de la douille 8 arrivent au contact de la deuxième patte de fourche 52. La rotation de la douille est dans un premier temps freinée pour s'arrêter complètement. Il est à noter que les moyens de butée axiale comprennent une surface moletée de façon à augmenter le coefficient de frottement entre la douille 8 et la deuxième patte de fourche 52.

Dès que les moyens de butée axiale sont au contact, le dispositif passe en configuration de serrage, proprement dite. En effet, c'est dans cette configuration de serrage que le couple exercé par l'utilisateur est, partiellement, au moins, converti en effort de serrage du moyeu de la roue par rapprochement des deux pattes de fourche.

Dans cette configuration de serrage, il est important d'optimiser le rendement et par conséquent de réduire au minimum la proportion de couple exercée qui se dissipe dans des frottements. On prévoit pour cela de placer une rondelle de glissement 90 entre la collerette 211 et la douille 8, cette rondelle de glissement 90 sera par exemple réalisée en thermoplastique à bas coefficient de frottement.

Afin de maximiser le rendement du serrage il est aussi favorable de réduire le rayon moyen de frottement de la rondelle de glissement 90 en minimisant son diamètre moyen, sa surface d'appui doit toutefois rester suffisante pour que la pression générée par l'effort axial de serrage ne conduise pas à un fluage excessif de cette rondelle avec le temps.

Le serrage effectif prend fin lorsque le couple qu'il est nécessaire d'exercer pour poursuivre la rotation du capuchon 6 est supérieur à la valeur prédéterminée. Cette valeur prédéterminée est comprise entre 3 et 20 N.m et de préférence entre 6 et 12 N.m.

Grâce au dispositif limiteur de couple, si un couple trop important est exercé par l'utilisateur, les surfaces de came qui sont en contact l'une avec l'autre vont glisser l'une sur l'autre. Il se produit alors un écartement des bagues 71 et 72 qui lorsqu'il atteint son maximum désolidarise la rotation du capuchon 6 de l'ensemble canon/tige. Sous l'effet de glissement relatif des cames l'une par rapport à l'autre, les bagues quittent la configuration « proche » pour se mettre dans la configuration « écartée ». Lors de cette phase, le ressort 75 se comprime en s'opposant au déplacement des cames.

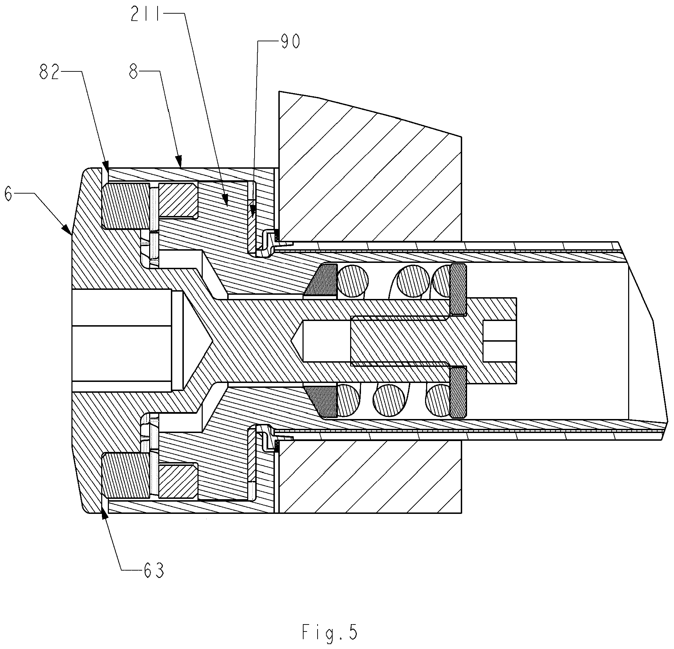

Cependant, comme on peut le voir à la figure 5, à partir du moment où les bagues 71 et 72 commencent à s'écarter et se retrouvent dans la configuration « écartée », il n'y a plus de contact entre la face arrière 63 du capuchon et la deuxième extrémité axiale 82 de la douille 8. Ainsi, dans les derniers moments de la phase de serrage, la plus grande partie du couple exercé par l'utilisateur est transmis à l'ensemble canon/tige. Ceci permettant d'améliorer le rendement du dispositif en fin de serrage, c'est-à-dire, au moment où le couple nécessaire au serrage atteint son maximum.

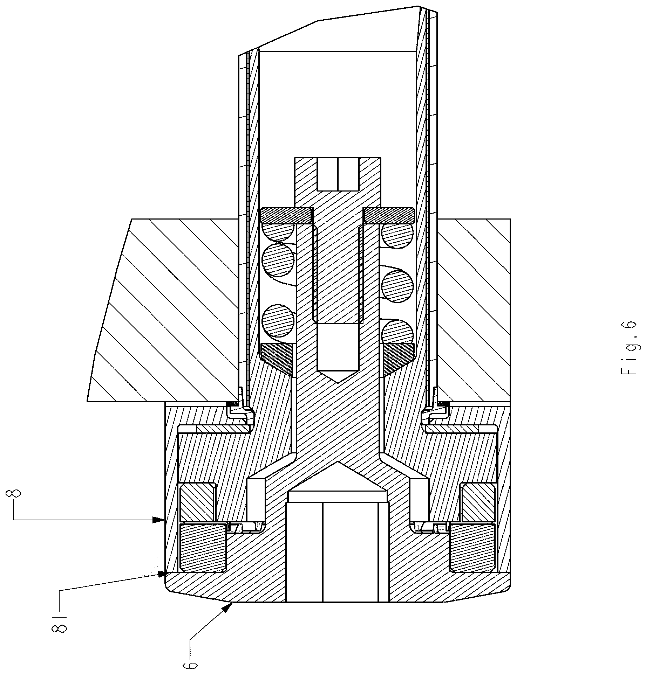

La figure 6 représente la broche dans la configuration serrée, c'est-à-dire dans la configuration qu'elle occupera pendant toute la phase d'utilisation du vélo par l'utilisateur et jusqu'au moment où l'utilisateur souhaitera démonter la roue du cadre.

C'est à partir de cette configuration « serrée », et dès que le desserrage est initié que le dispositif de freinage 81 devient opérationnel. Comme on le verra plus loin, ce dispositif de freinage 81 vise à augmenter le couple nécessaire à l'initiation de la phase de desserrage.

Le dispositif de freinage 81 comprend deux surfaces de friction que sont, d'une part, la face arrière 63 du capuchon 6 et, d'autre part, la deuxième extrémité 82 de la douille 8.

Lorsque la phase de desserrage est initiée par l'utilisateur par l'insertion d'une clé Allen dans l'empreinte 62, la surface moletée de la douille 8 est serrée contre la surface de la patte de fourche. Avant que le couple exercé par l'utilisateur puisse être transmis à la tige par l'intermédiaire des deux bagues, il faut que ces dernières soient dans une configuration angulaire respective qui le permette. Or, compte-tenu de l'écart angulaire séparant les nervures, la configuration angulaire relative des bagues pour un entraînement anti-horaire (sens du desserrage) est décalée du même écart angulaire par rapport à la configuration angulaire relative permettant un entraînement horaire (sens du serrage). Par conséquent, une rotation du capuchon 6 est nécessaire avant que le couple exercé par l'utilisateur puisse être transmis à la tige 2. Dans le mode de réalisation décrit, l'écart angulaire entre deux nervures adjacentes est de 30°, si bien qu'au début de la phase de serrage la plus grande partie du couple transmis par l'utilisateur est consommé par les frottements générés entre la face arrière 63 du capuchon 6 et la deuxième extrémité 82 axiale de la douille 8.

La figure 10 montre la position angulaire relative des deux bagues à l'issue de la rotation initiale du capuchon dans le sens du desserrage jusqu'à ce que les surface d'appui 78 viennent au contact l'une avec l'autre et que le couple de desserrage exercé par l'utilisateur soit transmis à la tige 2.

Judicieusement, la surface de la deuxième extrémité axiale 82 de la douille et la face arrière 63 du capuchon sont traitées de façon à maximiser les coefficients de frottement. Les choix de matériau et de traitement de surface des faces en contact permettent de garantir que le couple nécessaire pour initier le desserrage soit supérieur à 70 % et de préférence supérieur à 80% du couple de serrage nécessaire pour une fixation optimale de la roue.

A titre d'exemple, dans l'exemple décrit sur les figures, le couple de déclenchement de limiteur de couple a été taré à 8 N.m en ayant un ressort 75 taré à un seuil d'effort de 500 N (pour cela les cames ont été conçues avec une pente moyenne d'hélice de 32,5°). Lors de la phase de desserrage la face arrière 63 du capuchon 6 doit alors supporter cet effort axial de 500 N, le couple de frottement généré exclusivement lors du desserrage sur cette face dont le rayon moyen est de 10 mm avec un coefficient de frottement de 0,2 se calcule ainsi :

$$C_{frottement} = f.R_{moy}.Fa = 1\ N.m$$

Ce couple de frottement additionnel représente ici 12,5% du couple de serrage relevant ainsi sensiblement de 12,5% le ratio entre couple de desserrage / couple de serrage permettant ainsi d'atteindre beaucoup plus facilement le seuil de 70% exigé par les normes de sécurité voire même de 85 % garantissant ainsi une plus grande marge de sécurité.

Il est préférable, dans le cadre de l'invention, que le dispositif de freinage soit dimensionné de telle manière que le couple de frottement additionnel soit supérieur à 5% et de préférence à 10% de la valeur du couple de serrage maximal, c'est-à-dire du couple de déclenchement du limiteur de couple.

Avantageusement, le dispositif de freinage de l'invention ne nécessite pas la mise en place d'une pièce supplémentaire qui pourrait alourdir ou rendre plus volumineuse l'extrémité de la broche. En effet, les différents éléments qui le constituent et qui contribuent à son fonctionnement, à savoir la douille 8, le capuchon 6 et les deux bagues ne lui sont pas exclusivement dédiés. La douille 8, en l'occurrence, a d'abord pour fonction d'être le corps extérieur de l'extrémité 4 de la broche.

De plus, la présence d'un dispositif limiteur de couple permet, lors de la conception mécanique des différentes pièces constituant la broche, d'optimiser le poids des pièces. C'est notamment le cas pour la tige dont l'épaisseur peut être minimale dans la mesure où celle ne peut pas être soumise à des contrainte en torsion trop importantes.

Comme on peut le voir à la figure 9, lorsque le limiteur de couple est opérationnel, le dispositif de freinage n'est, quant à lui, plus opérationnel. En effet, le limiteur de couple est opérationnel lorsque le couple de serrage exercé par l'utilisateur s'approche du seuil de déclenchement ce qui se traduit immédiatement par l'écartement des deux surfaces de friction l'une par rapport à l'autre, ce qui, de fait, engendre la mise hors service du dispositif de freinage.

On peut également sans sortir du cadre de l'invention ajouter un moletage ayant un pas angulaire assez fin entre la face arrière 63 et l'extrémité de la bague 8 afin d'augmenter le couple de frottement additionnel lors du desserrage.

## Revendications

1. Broche (1) de serrage pour la fixation d'une roue de cycle sur le cadre d'un cycle comportant une tige (2) s'étendant selon un axe longitudinal et ayant une partie centrale encadrée par deux extrémités, la première (3) desdites deux extrémités comportant une portion filetée (31) apte à coopérer avec un taraudage ménagé dans une première portion du cadre du cycle, la deuxième extrémité (4) étant quant à elle pourvue de moyens de butée axiale (42) prévus pour venir au contact d'une deuxième portion du cadre du cycle ainsi que de moyens d'entraînement (41) prévus pour permettre à un utilisateur d'exercer alternativement un couple de serrage ou un couple de desserrage, un limiteur de couple opérationnel dans le sens de serrage étant placé entre lesdits moyens d'entraînement (41) et ladite tige (2), **caractérisé en ce que** la broche (1) comprend en outre un dispositif de freinage (81) apte à augmenter le couple nécessaire pour initier la rotation des moyens d'entraînement dans le sens du desserrage, ledit dispositif de freinage (81) comprenant deux surfaces de friction qui sont en contact l'une avec l'autre lorsque les moyens de butée axiale (42) sont en contact avec la deuxième portion de cadre ; et **en ce que** le limiteur de couple est opérationnel lorsque le couple de serrage exercé par l'utilisateur s'approche du seuil de déclenchement ce qui se traduit immédiatement par l'écartement des deux surfaces de friction l'une par rapport à l'autre, engendrant ainsi la mise hors service du dispositif de freinage.

2. Broche selon la revendication 1, **caractérisée en ce que** le dispositif limiteur de couple comprend deux bagues à cames (71, 72) juxtaposées et mobiles l'une par rapport à l'autre en translation selon l'axe longitudinal et en rotation selon le même axe et **en ce que** chacune desdites bagues comprend des cames permettant de faire varier la position axiale relative des deux bagues entre une position « proche » et une position « écartée ».

3. Broche de serrage selon la revendication précédente, **caractérisée en ce que** le dispositif de freinage (81) est placé entre lesdits moyens d'entraînement (41) et ladite tige (2).

4. Broche selon la revendication précédente, **caractérisée en ce que** le dispositif de freinage (81) comprend une douille (8) cylindrique dont une première extrémité axiale (83) constitue lesdits moyens de butée axiale (42) et dont une deuxième extrémité (82) peut venir en contact avec une surface solidaire des moyens d'entraînement (41).

5. Broche selon la revendication précédente, **caractérisée en ce que** la longueur axiale de la douille (8) est telle que lorsque les deux bagues du limiteur de couple sont dans la position « proche », la deuxième extrémité de la douille est en contact avec la surface solidaire des moyens d'entraînement (41) tandis que lorsque les deux bagues sont en position « écartée », la deuxième extrémité de la douille n'est pas en contact avec ladite surface.

6. Broche selon l'une des revendications précédentes, **caractérisée en ce que** le limiteur de couple présente une valeur de déclenchement comprise entre 3 et 20 N.m, de préférence, comprise entre 6 et 12 N.m.

7. Broche selon la revendication précédente, **caractérisée en ce que** lorsque l'utilisateur initie la phase de desserrage, le dispositif de freinage génère un couple de frottement qui est supérieur à 5%, de préférence 10% de la valeur du couple de déclenchement du limiteur de couple.

**Patentansprüche**

1. Spanndorn (1) für die Befestigung eines Fahrradrads an dem Rahmen eines Fahrrads, aufweisend eine Stange (2), die sich entlang einer Längsachse erstreckt und einen mittleren Teil hat, der von zwei Enden umrahmt ist, wobei das erste (3) der beiden Enden einen Gewindeabschnitt (31) aufweist, der mit einem in einem ersten Abschnitt des Rahmens des Fahrrads ausgeführten Innengewinde zusammenwirken kann, während das zweite Ende (4) mit Axialanschlagmitteln (42) versehen ist, die dazu vorgesehen sind, mit einem zweiten Abschnitt des Rahmens des Fahrrads in Kontakt zu kommen, sowie mit Antriebsmitteln (41), die dazu vorgesehen sind, einem Benutzer zu gestatten, alternativ ein Anzugsmoment oder ein Lösemoment auszuüben, wobei ein in Anzugsrichtung wirkender Drehmomentbegrenzer zwischen den Antriebsmitteln (41) und der Stange (2) platziert ist, **dadurch gekennzeichnet, dass** der Dorn (1) ferner eine Bremsvorrichtung (81) umfasst, die das zur Einleitung des Drehens der Antriebsmittel in der Löserichtung notwendige Moment erhöhen kann, wobei die Bremsvorrichtung (81) zwei Reibflächen umfasst, die miteinander in Kontakt stehen, wenn die Axialanschlagmittel (42) mit dem zweiten Rahmenabschnitt in Kontakt stehen, und dass der Drehmomentbegrenzer wirksam ist, wenn sich das durch den Benutzer ausgeübte Anzugsmoment der Auslöseschwelle nähert, was sich sofort dadurch äußert, dass sich die beiden Reibflächen voneinander entfernen, wodurch somit die Außerbetriebsetzung der Bremsvorrichtung hervorgerufen wird.

2. Dorn nach Anspruch 1, **dadurch gekennzeichnet, dass** die Drehmomentbegrenzervorrichtung zwei nebeneinanderliegende Nockenringe (71, 72) umfasst, die bezüglich einander translationsmäßig entlang der Längsachse und drehungsmäßig entlang derselben Achse beweglich sind, und dass jeder der Ringe Nocken umfasst, durch die sich die axiale Relativposition der beiden Ringe zwischen einer "nahen" Position und einer "beabstandeten" Position verändern lässt.

3. Spanndorn nach dem vorhergehenden Anspruch, **dadurch gekennzeichnet, dass** die Bremsvorrichtung (81) zwischen den Antriebsmitteln (41) und der Stange (2) platziert ist.

4. Dorn nach dem vorhergehenden Anspruch, **dadurch gekennzeichnet, dass** die Bremsvorrichtung (81) eine zylindrische Hülse (8) umfasst, deren erstes axiales Ende (83) die Axialanschlagmittel (42) darstellt und deren zweites Ende (82) mit einer fest mit den Antriebsmitteln (41) verbundenen Fläche in Kontakt kommen kann.

5. Dorn nach dem vorhergehenden Anspruch, **dadurch gekennzeichnet, dass** die axiale Länge der Hülse (8) derart ist, dass das zweite Ende der Hülse mit der fest mit den Antriebsmitteln (41) verbundenen Fläche in Kontakt steht, wenn die beiden Ringe des Drehmomentbegrenzers in der "nahen" Position sind, während das zweite Ende der Hülse nicht mit der Fläche in Kontakt steht, wenn die beiden Ringe in der "beabstandeten" Position sind.

6. Dorn nach einem der vorhergehenden Ansprüche, **dadurch gekennzeichnet, dass** der Drehmomentbegrenzer einen Auslösewert zwischen 3 und 20 N.m, vorzugsweise zwischen 6 und 12 N.m, aufweist.

7. Dorn nach dem vorhergehenden Anspruch, **dadurch gekennzeichnet, dass** die Bremsvorrichtung ein Reibmoment erzeugt, wenn der Benutzer die Lösephase einleitet, das mehr als 5%, vorzugsweise 10%, des Werts des Auslösemoments des Drehmomentbegrenzers beträgt.

**Claims**

1. Through-axle (1) for attaching a bicycle wheel to the frame of a bicycle, comprising an axle (2) extending along a longitudinal axis and having a central part flanked by two ends, the first (3) of the said two ends comprising a threaded portion (31) able to engage with a tapped thread formed in a first portion of the bicycle frame, the second end (4) for its part being provided with axial-abutment means (42) intended to come into contact with a second portion of the bicycle frame as well as drive means (41) intended to allow a user to apply alternatively either a tightening torque or a loosening torque, a torque limiter that is operational in the tightening direction being positioned between the said driving means (41) and the said axle (2),

**characterized in that** the through-axle (1) further comprises a braking device (81) able to increase the torque needed to initiate rotation of the driving means in the direction of loosening, the said braking device (81) comprising two friction surfaces which are in contact with one another when the axial-abutment means (42) are in contact with the second frame portion; and **in that** the torque limiter is operational when the tightening torque exerted by the user nears the breakover threshold which immediately results in the two friction surfaces moving away from one another, thus putting the braking device out of action.

2. Through-axle according to Claim 1, **characterized in that** the torque limiter device comprises two cam rings (71, 72) which are juxtaposed and able to move relative to one another translationally along the longitudinal axis and rotationally about the same axis and **in that** each of the said rings comprises cams allowing the relative axial position of the two rings to be varied between a "close" position and a "parted" position.

3. Through-axle according to the preceding claim, **characterized in that** the braking device (81) is placed between the said drive means (41) and the said axle (2).

4. Through-axle according to the preceding claim, **characterized in that** the braking device (81) comprises a cylindrical bushing (8) of which a first axle end (83) constitutes the said axle-abutment means (42) and of which a second end (82) can come into contact with a surface solid with the drive means (41).

5. Through-axle according to the preceding claim, **characterized in that** the axial length of the bushing (8) is such that when the two rings of the torque limiter are in the "close" position, the second end of the bushing is in contact with the surface solid with the drive means (41), whereas when the two rings are in the "parted" position, the second end of the bushing is not in contact with the said surface.

6. Through-axle according to one of the preceding claims, **characterized in that** the torque limiter has a breakover value of between 3 and 20 N.m, preferably comprised between 6 and 12 N.m.

7. Through-axle according to the preceding claim, **characterized in that** when the user initiates the loosening phase, the braking device generates a friction torque which is greater than 5%, preferably 10%, of the value of the breakover torque of the torque limiter.

Fig. 1

Fig.2

Fig. 3

EP 3 401 200 B1

Fig.4

12

Fig.5

Fig.6

Fig.7

Fig.8

EP 3 401 200 B1

Fig.9

Fig.10

16

**EP 3 401 200 B1**

## RÉFÉRENCES CITÉES DANS LA DESCRIPTION

**Documents brevets cités dans la description**

- EP 810944 A
- EP 2070725 A
- US 9308961 B
- WO 2008145496 A
- FR 3037919
- EP 2987713 A